# EUROPEAN PATENT SPECIFICATION

(11) **EP 4 361 009 B1**
(45) Date of publication and mention of the grant of the patent: **29.01.2025**
(21) Application number: 23184662.7
(22) Date of filing: 11.07.2023
(51) Int. Cl.: B62J 17/02

(54) **STRADDLED VEHICLE**
GRÄTSCHSITZFAHRZEUG
VÉHICULE À SELLE

(30) Priority: 27.10.2022 JP 2022172147
(43) Date of publication of application: 01.05.2024
(73) Proprietor: Yamaha Hatsudoki Kabushiki Kaisha, Iwata-shi, Shizuoka 438-8501 (JP)
(72) Inventor: Thanomsakcharn, Noppakhun, 10570 Samut Prakan (TH); Kongnakorn, Unnop, 10570 Samut Prakan (TH); Fujisaka, Masahiko, 10570 Samut Prakan (TH)
(74) Representative: Grünecker Patent- und Rechtsanwälte PartG mbB

(56) References cited:
- EP-B1- 2 128 007
- US-A1- 2011 057 431

## Description

The present invention relates to a straddled vehicle according to the preamble of independent claim 1. Such a straddled vehicle can be taken from the prior art document EP 2 128 007 B1.

There has been known a type of straddled vehicle including a front cover, a leg shield disposed directly behind the front cover, and a loading hook disposed on the leg shield (JP 7064622 A).

When such a conventional type of straddled vehicle as described above travels with an item hooked on the loading hook, chances are that the item greatly swings in either a back-and-forth direction or a right-and-left direction; namely, instability in position of the item is concerned.

It is an object of the present invention to provide a straddled vehicle that an item is easily made stable in position when hooked on a loading hook disposed on a leg shield. According to the present invention said object is solved by a straddled vehicle having the features of independent claim 1. Preferred embodiments are laid down in the dependent claims.

Such straddled vehicle includes a head pipe, a front cover, a leg shield, and a loading hook. The front cover is disposed further on a front side than the head pipe. The leg shield is disposed directly behind the front cover. The loading hook is disposed on the leg shield. The leg shield includes a first recess disposed directly below the loading hook. The first recess extends in an up-and-down direction and forms a space in which an item hooked on the loading hook is enabled to be accommodated at least in part.

In the straddled vehicle according to the present preferred embodiment, the first recess is disposed directly below the loading hook and forms the space in which the item, hooked on the loading hook, is enabled to be accommodated at least in part. Accordingly, the item, hooked on the loading hook, is enabled to be accommodated at least in part in the first recess; hence, the item is easily made stable in position.

The loading hook may overlap at a rear end thereof with the first recess in a vehicle plan view. In this case, when hooked on the loading hook, the item is likely to fit into the first recess by the gravity thereof.

The first recess extends further rearward than the loading hook. In this case, when hooked on the loading hook, the item is likely to fit into the first recess by the gravity thereof.

The first recess may extend downward and rearward from the loading hook. In this case, when hooked on the loading hook, the item is more likely to fit into the first recess by the gravity thereof.

The leg shield further includes a panel on which the loading hook is disposed. The first recess may be provided on the panel. In this case, the panel can be enhanced in stiffness; hence, the loading hook is enhanced in load bearing performance.

The panel of the leg shield may include a first rear surface portion extending downward and rearward. The first recess may be provided on the first rear surface portion. In this case, the panel can be enhanced in stiffness; simultaneously, when hooked on the loading hook, the item is likely to fit into the first recess by the gravity thereof.

The panel of the leg shield may further include a second rear surface portion that is disposed directly above the first rear surface portion and extends upward and rearward from the first rear surface portion. The loading hook may be disposed on the second rear surface portion. In this case, the panel can be enhanced in stiffness; simultaneously, the space for enabling accommodation of the item can be made greater in size than the configuration that the loading hook is disposed on the first rear surface portion.

The leg shield may further include a second recess that is disposed directly above and further on a front side than the first recess. The loading hook may be disposed in the second recess. In this case, the loading hook can be inhibited from protruding as much as possible.

The first recess may be shaped to increase in width with proximity to the loading hook. In this case, the first recess makes the leg shield appear to be slim.

The first recess may be shaped to increase in depth with proximity to the loading hook. In this case, when hooked on the loading hook, the item becomes likely to contact with the bottom surface of the first recess; hence, the item is easily made stable in position.

The straddled vehicle may further include an accommodation pocket disposed on a lateral side of the first recess of the leg shield. The leg shield may further include a guide wall that forms part of the accommodation pocket and enables the item hooked on the loading hook to be guided to the first recess. In this case, the item, hooked on the loading hook, is enabled to be guided to the first recess by utilizing part of the accommodation pocket without hindering a required space for the accommodation pocket.

Overall, according to the present invention, it is made possible to provide a straddled vehicle that an item is easily made stable in position when hooked on a loading hook disposed on a leg shield.

### BRIEF DESCRIPTION OF THE DRAWINGS

FIG. 1 is a side view of a straddled vehicle according to a preferred embodiment.
FIG. 2 is a perspective view of a leg shield.
FIG. 3 is a rear view of the leg shield.
FIG. 4 is a cross-sectional view of the leg shield.

### DETAILED DESCRIPTION OF EMBODIMENTS

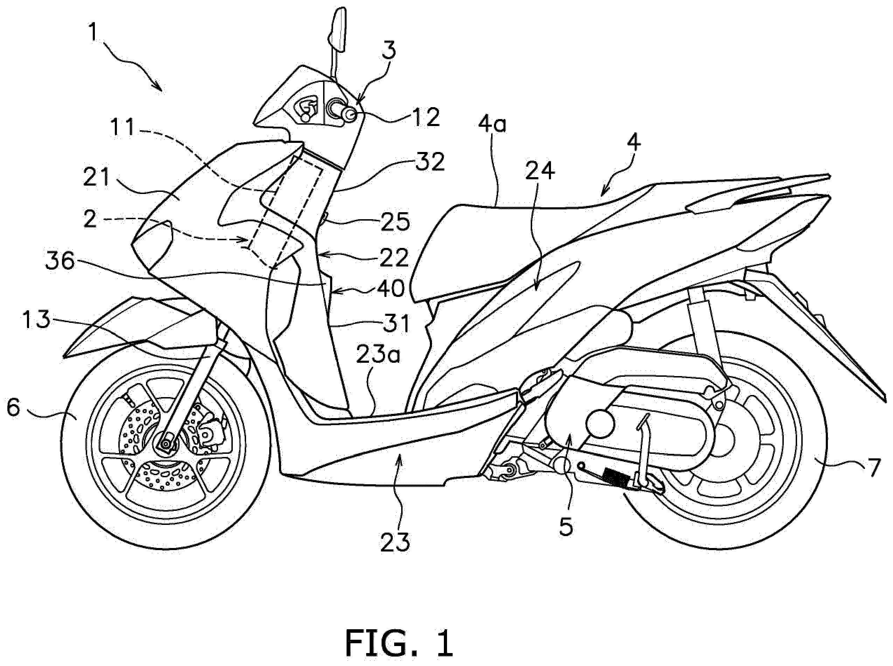

A straddled vehicle according to a preferred embodiment will be hereinafter explained with reference to drawings. FIG. 1 is a side view of a straddled vehicle 1 according to the preferred embodiment. It should be noted that in the following explanation, terms indicating such directions as "back and forth", "up and down" and "right and left" are explained based on directions seen from a rider in operation of the straddled vehicle 1 and are indicated as vehicle back-and-forth direction, vehicle up-and- down direction and vehicle right-and-left direction.

The straddled vehicle 1 includes a vehicle body frame 2, a steering device 3, a seat 4, a power unit 5, a front wheel 6, and a rear wheel 7.

The vehicle body frame 2 includes a head pipe 11. The vehicle body frame 2 includes a down frame, a lower frame, and a rear frame, all of which are not illustrated in the drawings. The head pipe 11 is disposed in the middle of the vehicle in a vehicle width direction.

The steering device 3 is supported by the head pipe 11 so as to be turnable. The steering device 3 includes a handle member 12 and a front fork 13. The handle member 12 is connected to the front fork 13. The front fork 13 is connected to the front wheel 6.

The seat 4 is disposed directly behind the head pipe 11. The power unit 5 is disposed directly below the seat 4. The power unit 5 is supported by the vehicle body frame 2. The front wheel 6 is supported by the front fork 13 so as to be rotatable. The rear wheel 7 is rotated by a driving force generated by the power unit 5.

The straddled vehicle 1 includes a front cover 21, a leg shield 22, a lower cover 23, a rear cover 24, and a loading hook 25. The front cover 21 covers the head pipe 11 from front.

The leg shield 22 is disposed directly behind the front cover 21. The leg shield 22 is disposed directly in front of the seat 4. The leg shield 22 covers the head pipe 11 from behind.

The lower cover 23 is disposed between the leg shield 22 and the rear cover 24. The lower cover 23 includes a footboard 23a on which the rider puts the feet. The footboard 23a is provided on the upper surface of the lower cover 23. The footboard 23a has a flat shape. The rear cover 24 is disposed directly below the seat 4.

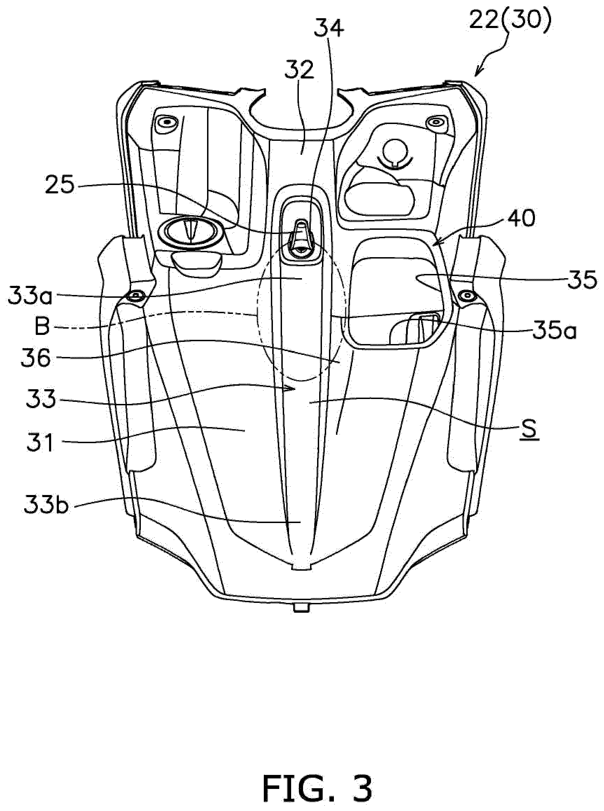

The loading hook 25 is disposed on the leg shield 22. The loading hook 25 is made in shape of a hook and enables an item B (see FIG. 3) such as a carrier-bag or a handbag to be hooked thereon.

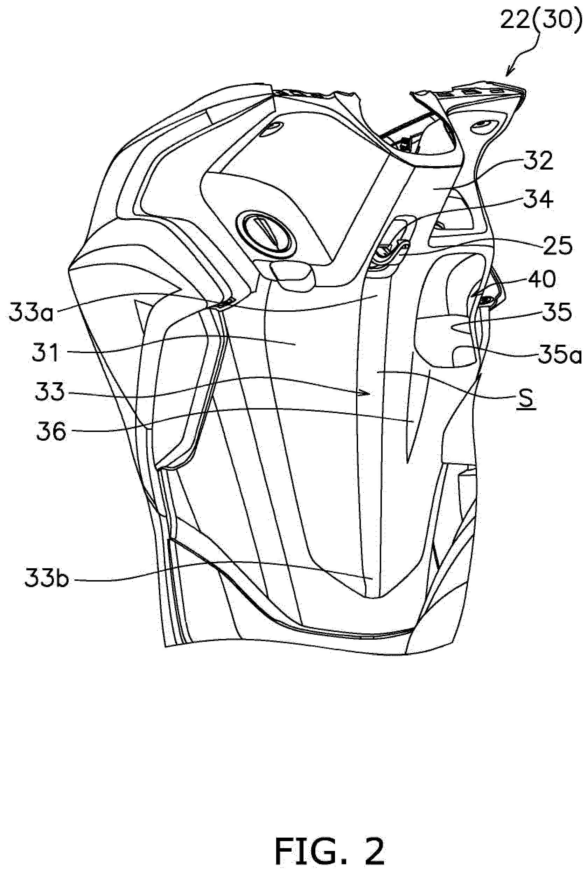

Next, with reference to FIGS. 1 to 4, the leg shield 22 and the loading hook 25 will be explained in detail. As shown in FIGS. 1 to 4, the leg shield 22 includes a panel 30, a first rear surface portion 31, a second rear surface portion 32, a first recess 33, a second recess 34, an opening 35, and a guide wall 36.

The panel 30 is provided as a single member. In the present preferred embodiment, the panel 30 is provided as the leg shield 22. In other words, the panel 30 includes the first rear surface portion 31, the second rear surface portion 32, the first recess 33, the second recess 34, the opening 35, and the guide wall 36. It should be noted that the leg shield 22 may be composed of a combination of a plurality of members.

The first rear surface portion 31 extends downward and rearward from an upper side thereof to a lower side thereof. The lower end of the first rear surface portion 31 is disposed further on the lower side than the seat 4.

The second rear surface portion 32 is disposed directly above the first rear surface portion 31. The second rear surface portion 32 is connected to the first rear surface portion 31. The second rear surface portion 32 extends upward and rearward from the upper end of the first rear surface portion 31. The second rear surface portion 32 is shaped to protrude rearward at a middle part thereof in the vehicle width direction. The second rear surface portion 32 is shaped to avoid contact with the head pipe 11. The second rear surface portion 32 is disposed directly behind and on the lateral sides of the head pipe 11.

The first recess 33 is provided on the first rear surface portion 31. The first recess 33 is provided on the panel 30. The first recess 33 is shaped to be recessed forward. The first recess 33 is opened rearward. The first recess 33 extends in the up-and-down direction and forms a space S in which the item B, hooked on the loading hook 25, is enabled to be accommodated at least in part. The first recess 33 is provided in a middle part of the first rear surface portion 31 in the vehicle width direction.

The first recess 33 is disposed directly below the loading hook 25. The first recess 33 extends downward and rearward from the loading hook 25. The first recess 33 extends further rearward than the loading hook 25. An upper end 33a of the first recess 33 is located further on the lower side than an upper surface 4a of the seat 4. A lower end 33b of the first recess 33 is located further on the rear side than the loading hook 25. The lower end 33b of the first recess 33 is located further on the lower side than the seat 4.

The first recess 33 is shaped to increase in width with proximity to the loading hook 25. The first recess 33 is shaped to taper toward the footboard 23a. In the first recess 33, the upper end 33a is greater in width than the lower end 33b. The width of the first recess 33 means a dimension of the first recess 33 in the vehicle width direction.

The first recess 33 is shaped to increase in depth with proximity to the loading hook 25. The first recess 33 increases in depth with proximity to the upper end 33a thereof. In the first recess 33, the upper end 33a is greater in depth than the lower end 33b. The depth of the first recess 33 means a dimension of the first recess 33 in a vehicle back-and-forth direction.

The second recess 34 is provided on the second rear surface portion 32. The second recess 34 is provided on the panel 30. The second recess 34 is shaped to be recessed forward. The second recess 34 is opened rearward. The second recess 34 is provided in a middle part of the second rear surface portion 32 in the vehicle width direction. The second recess 34 is disposed directly behind the head pipe 11. The second recess 34 is disposed directly above and further on the front side than the first recess 33.

The opening 35 is provided for putting an item in an accommodation pocket 40 and for taking the item therefrom. The accommodation pocket 40 is disposed on a lateral side of the first recess 33. The opening 35 is provided in the first rear surface portion 31. The opening 35 is disposed on the lateral side of the first recess 33. The opening 35 is opened upward. The accommodation pocket 40 is not provided with a lid member for closing and opening the opening 35. In other words, the opening 35 is constantly opened. A rear end 35a of the opening 35 is located further on the lower side and a rear side than the upper end 33a of the first recess 33. The rear end 35a of the opening 35 is located further on the rear side than the loading hook 25.

The guide wall 36 is provided on the first rear surface portion 31. The guide wall 36 is disposed between the opening 35 and the first recess 33 on the first rear surface portion 31. The guide wall 36 extends forward and downward from the rear end 35a of the opening 35. The guide wall 36 enables the item B, hooked on the loading hook 25, to be guided to the first recess 33. The guide wall 36 is disposed further on the rear side than the first recess 33. The guide wall 36 forwardly tilts to approach to the first recess 33. The guide wall 36 composes part of the accommodation pocket 40.

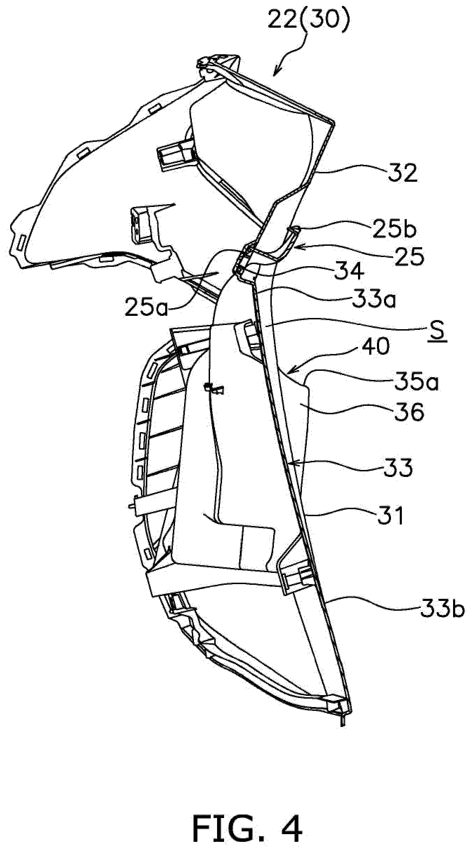

The loading hook 25 is disposed on the second rear surface portion 32. The loading hook 25 is disposed on the panel 30. The loading hook 25 is disposed on a member on which the first recess 33 is provided. The loading hook 25 is disposed in the second recess 34. The loading hook 25 is fixed to the second recess 34. For example, the loading hook 25 is fixed together with the vehicle body frame 2 to the second recess 34 by a fastening member (not shown in the drawings). The loading hook 25 extends rearward and upward from the second recess 34. The loading hook 25 is disposed further on the lower side than the upper surface 4a of the seat 4. As shown in FIG. 4, a front end 25a of the loading hook 25 is located further on the front side than the first recess 33. A rear end 25b of the loading hook 25 overlaps with the first recess 33 in a vehicle plan view. The rear end 25b of the loading hook 25 is located further on the front side than the lower end 33b of the first recess 33.

In the straddled vehicle 1 according to the present preferred embodiment, the first recess 33 is disposed directly below the loading hook 25 and forms the space S in which an item, hooked on the loading hook 25, is enabled to be accommodated at least in part. Accordingly, the item, hooked on the loading hook 25, is enabled to be accommodated at least in part in the first recess 33; hence, the item is easily made stable in position.

The first recess 33 extends downward and rearward from the loading hook 25; hence, when hooked on the loading hook 25, the item is more likely to fit into the first recess 33 by the gravity thereof.

The first recess 33 is provided on the panel 30 on which the loading hook 25 is disposed; hence, the panel 30 can be enhanced in stiffness.

Each of the loading hook 25 and the first recess 33 may be changed in shape and positional arrangement. The loading hook 25 may be disposed on the first rear surface portion 31. The loading hook 25 may be disposed on a member different from the member on which the first recess 33 is provided. Each of the loading hook 25 and the first recess 33 may be disposed in a position displaced from the middle in the vehicle width direction. The loading hook 25 may be disposed in the second recess 34, while being turnable. The first recess 33 may extend at least in part downward and forward.

### REFERENCE SIGNS LIST

- 1: Straddled vehicle
- 11: Head pipe
- 21: Front cover
- 22: Leg shield
- 25: Loading hook
- 30: Panel
- 31: First rear surface portion
- 32: Second rear surface portion
- 33: First recess
- 34: Second recess
- 36: Guide wall
- 40: Accommodation pocket

## Claims

1. A straddled vehicle (1) comprising:
a head pipe (11);
a front cover (21) disposed further on a front side than the head pipe (11) with regard to a vehicle back-and-forth direction;
a leg shield (22) disposed behind the front cover (21) with regard to the vehicle back-and-forth direction; and
a loading hook (25) disposed on the leg shield (22), wherein
the leg shield (22) includes a first recess (33) disposed below the loading hook (25) with regard to a vehicle up-and-down direction, the leg shield (22) further includes a panel (30),
the first recess (33) extends in an up-and-down direction with regard to the vehicle up-and- down direction, the first recess (33) forming a space (S) in which an item (B) hooked on the loading hook (25) is enabled to be accommodated at least in part, and the first recess (33) extends further rearward than the loading hook (25) with regard to the vehicle back-and-forth direction, **characterized in that** the loading hook (25) is disposed on the panel (30) of the leg shield (22), and
the first recess (33) is provided on the panel (30).

2. The straddled vehicle (1) according to claim 1, **characterized in that** the loading hook (25) overlaps at a rear end thereof with the first recess (33) in a vehicle plan view.

3. The straddled vehicle (1) according to claim 1 or 2, **characterized in that** the first recess (33) extends downward with regard to the vehicle up-and-down direction and rearward with regard to the vehicle back-and-forth direction from the loading hook (25).

4. The straddled vehicle (1) according to any one of claims 1 to 4, **characterized in that** the panel (30) of the leg shield (22) includes a first rear surface portion (31) extending downward with regard to the vehicle up-and-down direction and rearward with regard to the vehicle back-and-forth direction, and
the first recess (33) is provided on the first rear surface portion (31).

5. The straddled vehicle (1) according to claim 4, **characterized in that** the panel (30) of the leg shield (22) further includes a second rear surface portion (32), the second rear surface portion (32) is disposed above the first rear surface portion (31) with regard to the vehicle up-and-down direction, the second rear surface portion (32) extending upward with regard to the vehicle up-and-down direction and rearward with regard to the vehicle back-and-forth direction from the first rear surface portion (31), and
the loading hook (25) is disposed on the second rear surface portion (32).

6. The straddled vehicle (1) according to any one of claims 1 to 5, **characterized in that** the leg shield (22) further includes a second recess (34), the second recess (34) is disposed above with regard to the vehicle up-and-down direction and further on a front side with regard to the vehicle back-and-forth direction than the first recess (33), and
the loading hook (25) is disposed in the second recess (34).

7. The straddled vehicle (1) according to any one of claims 1 to 6, **characterized in that** the first recess (33) is shaped to increase in width with proximity to the loading hook (25).

8. The straddled vehicle (1) according to any one of claims 1 to 7, **characterized in that** the first recess (33) is shaped to increase in depth with proximity to the loading hook (25).

9. The straddled vehicle (1) according to any one of claims 1 to 8, **characterized by:**
an accommodation pocket (40) disposed on a lateral side of the first recess (33) of the leg shield (22) with regard to a vehicle right-and-left direction, wherein
the leg shield (22) further includes a guide wall (36), the guide wall (36) is forming part of the accommodation pocket (40), the guide wall (36) is enabling the item (B) hooked on the loading hook (25) to be guided to the first recess (33).

## Patentansprüche

1. Ein Spreiz-Sitz-Fahrzeug (1), das umfasst:
ein Kopfrohr (11);
eine vordere Abdeckung (21), die weiter an einer Vorderseite als das Kopfrohr (11) in Bezug auf eine Fahrzeug-Rückwärts-und-Vorwärts-Richtung angeordnet ist;
ein Beinschild (22), das hinter der vorderen Abdeckung (21) das in Bezug auf die Fahrzeug-Rückwärts-und-Vorwärts-Richtung angeordnet ist; und
einen Ladehaken (25), der an dem Beinschild (22) angeordnet ist, wobei das Beinschild (22) eine erste Aussparung (33) enthält, die unterhalb des Ladehakens (25) die in Bezug auf eine Fahrzeug-Auf-und-Ab-Richtung angeordnet ist, das Beinschild (22) enthält weiterhin eine Platte (30),
die erste Aussparung (33) erstreckt sich in einer Auf-und-Ab-Richtung in Bezug auf die Fahrzeug-Auf-und-Ab-Richtung, die erste Aussparung (33) bildet einen Raum (S), in dem ein Gegenstand (B), der an dem Ladehaken (25) eingehängt ist, zumindest teilweise untergebracht werden kann, und die erste Aussparung (33) erstreckt sich weiter nach hinten als der Ladehaken (25) in Bezug auf die Fahrzeug-Rückwärts-und-Vorwärts-Richtung, **dadurch gekennzeichnet, dass** der Ladehaken (25) an der Platte (30) des Beinschildes (22) angeordnet ist, und
die erste Aussparung (33) an der Platte (30) vorgesehen ist.

2. Das Spreiz-Sitz-Fahrzeug (1) gemäß Anspruch 1, **dadurch gekennzeichnet, dass** der Ladehaken (25) in der Draufsicht auf das Fahrzeug an seinem hinteren Ende mit der ersten Ausnehmung (33) überlappt.

3. Das Spreiz-Sitz-Fahrzeug (1) gemäß Anspruch 1 oder 2, **dadurch gekennzeichnet, dass** die erste Aussparung (33) vom Ladehaken (25) aus in Fahrzeug-Auf-und-Ab-Richtung nach unten und in Fahrzeug-Rückwärts-und-Vorwärts-Richtung nach hinten erstreckt.

4. Das Spreiz-Sitz-Fahrzeug (1) gemäß irgendeinem der Ansprüche 1 bis 4, **dadurch gekennzeichnet, dass** die Platte (30) des Beinschilds (22) weiterhin einen ersten hinteren Flächenabschnitt (31) enthält, der sich in Bezug auf die Fahrzeug-Auf-und-Ab-Richtung nach unten und in Bezug auf die Fahrzeug-Rückwärts-und-Vorwärts-Richtung nach hinten erstreckt, und
die erste Aussparung (33) auf dem ersten hinteren Flächenabschnitt (31) vorgesehen ist.

5. Das Spreiz-Sitz-Fahrzeug (1) gemäß Anspruch 4, **dadurch gekennzeichnet, dass** die Platte (30) des Beinschilds (22) weiterhin einen zweiten hinteren Flächenabschnitt (32) enthält, der zweite hintere Flächenabschnitt (32) ist oberhalb des ersten hinteren Flächenabschnitts (31) in Bezug auf die Aufwärts- und Abwärtsrichtung des Fahrzeugs angeordnet, der zweite hintere Flächenabschnitt (32) erstreckt sich nach oben in Bezug auf die Aufwärts- und Abwärtsrichtung des Fahrzeugs und nach hinten in Bezug auf die Fahrzeug-Rückwärts-und-Vorwärts-Richtung vom ersten hinteren Flächenabschnitt (31), und
der Ladehaken (25) ist auf dem zweiten hinteren Flächenabschnitt (32) angeordnet.

6. Das Spreiz-Sitz-Fahrzeug (1) gemäß irgendeinem der Ansprüche 1 bis 5, **dadurch gekennzeichnet, dass** das Beinschild (22) weiterhin eine zweite Aussparung (34) enthält, die zweite Aussparung (34) ist oberhalb in Bezug auf die Fahrzeug-Auf-und-Ab-Richtung und weiter auf einer Vorderseite in Bezug auf die Fahrzeug-Rückwärts-und-Vorwärts-Richtung als die erste Aussparung (33) angeordnet, und
der Ladehaken (25) ist in der zweiten Ausnehmung (34) angeordnet.

7. Das Spreiz-Sitz-Fahrzeug (1) gemäß irgendeinem der Ansprüche 1 bis 6, **dadurch gekennzeichnet, dass** die erste Aussparung (33) geformt ist, in der Breite in der Nähe des Ladehakens (25) zuzunehmen.

8. Das Spreiz-Sitz-Fahrzeug (1) gemäß irgendeinem der Ansprüche 1 bis 7, **dadurch gekennzeichnet, dass** die erste Aussparung (33) geformt ist, in der Tiefe in der Nähe des Ladehakens (25) zuzunehmen.

9. Das Spreiz-Sitz-Fahrzeug (1) gemäß irgendeinem der Ansprüche 1 bis 8, **gekennzeichnet durch:**
eine Aufnahmetasche (40), die auf einer seitlichen Seite der ersten Ausnehmung (33) des Beinschilds (22) in Bezug auf eine Rechts-Links-Richtung des Fahrzeugs angeordnet ist, wobei
der Beinschild (22) weiterhin eine Führungswand (36) enthält, die Führungswand (36) einen Teil der Aufnahmetasche (40) bildet, die Führungswand (36) es ermöglicht, den Gegenstand (B), der am Ladehaken (25) eingehängt ist, zur ersten Aussparung (33) zu führen.

## Revendications

1. Véhicule chevauché (1) comprenant :
un tuyau de tête (11) ;
un capot avant (21) disposé plus loin sur un côté avant que le tuyau de tête (11) par rapport à une direction avant-arrière du véhicule ;
un protège-jambes (22) disposé derrière le capot avant (21) par rapport à la direction avant-arrière du véhicule ; et
un crochet de transport (25) disposé sur le protège-jambe (22), où le protège-jambes (22) inclut un premier renfoncement (33) disposé sous le crochet de transport (25) par rapport à une direction haut-bas du véhicule, le protège-jambes (22) inclut en outre un panneau (30),
le premier renfoncement (33) s'étend dans une direction haut-bas par rapport à la direction haut-bas du véhicule, le premier renfoncement (33) formant un espace (S) dans lequel un article (B) accroché au crochet de transport (25) peut être au moins partiellement reçu, et
le premier renfoncement (33) s'étend plus loin vers l'arrière que le crochet de transport (25) par rapport à la direction avant-arrière du véhicule, **caractérisé en ce que** le crochet de transport (25) est disposé sur le panneau (30) du protège-jambes (22), et
le premier renfoncement (33) est situé sur le panneau (30).

2. Véhicule chevauché (1) selon la revendication 1, **caractérisé en ce que** le crochet de transport (25) se superpose, à son extrémité arrière, au premier renfoncement (33) dans une vue en plan du véhicule.

3. Véhicule chevauché (1) selon la revendication 1 ou 2, **caractérisé en ce que** le premier renfoncement (33) s'étend vers le bas par rapport à la direction haut-bas du véhicule et vers l'arrière par rapport à la direction avant-arrière du véhicule à partir du crochet de transport (25).

4. Véhicule chevauché (1) selon l'une quelconque des revendications 1 à 4, **caractérisé en ce que** le panneau (30) du protège-jambes (22) inclut une première partie de surface arrière (31) s'étendant vers le bas par rapport à la direction haut-bas du véhicule et vers l'arrière par rapport à la direction avant-arrière du véhicule, et
le premier renfoncement (33) est situé sur la première partie de surface arrière (31).

5. Véhicule chevauché (1) selon la revendication 4, **caractérisé en ce que** le panneau (30) du protège-jambes (22) inclut en outre une seconde partie de surface arrière (32), la seconde partie de surface arrière (32) est disposée au-dessus de la première partie de surface arrière (31) par rapport à la direction haut-bas du véhicule, la seconde partie de surface arrière (32) s'étendant vers le haut par rapport à la direction haut-bas du véhicule et vers l'arrière par rapport à la direction avant-arrière du véhicule à partir de la première partie de surface arrière (31), et
le crochet de transport (25) est disposé sur la seconde partie de surface arrière (32).

6. Véhicule chevauché (1) selon l'une quelconque des revendications 1 à 5, **caractérisé en ce que** le protège-jambes (22) inclut en outre un second renfoncement (34), le second renfoncement (34) est disposé au-dessus par rapport à la direction haut-bas du véhicule et plus loin sur un côté avant par rapport à la direction avant-arrière du véhicule que le premier renfoncement (33), et
le crochet de transport (25) est disposé dans le second renfoncement (34).

7. Véhicule enjambé (1) selon l'une quelconque des revendications 1 à 6, **caractérisé en ce que** le premier renfoncement (33) est formé de manière à augmenter en largeur à proximité du crochet de transport (25).

8. Véhicule enjambé (1) selon l'une quelconque des revendications 1 à 7, **caractérisé en ce que** le premier renfoncement (33) est formé de manière à augmenter en profondeur à proximité du crochet de transport (25).

9. Véhicule chevauché (1) selon l'une quelconque des revendications 1 à 8, **caractérisé par** une poche de réception (40) disposée sur un côté latéral du premier renfoncement (33) du protège-jambes (22) par rapport à une direction droite-gauche du véhicule, où le protège-jambes (22) inclut en outre une paroi de guidage (36), la paroi de guidage (36) forme une partie de la poche de réception (40), la paroi de guidage (36) permet à l'article (B) accroché au crochet de transport (25) d'être guidé vers le premier renfoncement (33).
